# EUROPÄISCHE PATENTSCHRIFT

(11) **EP 1 062 137 B1**
(45) Veröffentlichungstag und Bekanntmachung des Hinweises auf die Patenterteilung: **03.05.2006**
(21) Anmeldenummer: 99964458.6
(22) Anmeldetag: 21.12.1999
(51) Int. Cl.: B60T 8/32

(54) **VERFAHREN ZUR KOMPENSATION DER TEMPERATURABHÄNGIGKEIT EINES SPULENWIDERSTANDES EINER VENTILSPULE**
METHOD FOR COMPENSATING THE TEMPERATURE DEPENDENCE OF AN INDUCTIVE RESISTANCE OF A VALVE COIL
PROCEDE DE COMPENSATION DE LA DEPENDANCE DE TEMPERATURE D'UNE RESISTANCE INDUCTIVE D'UNE VALVE ELECTROMAGNETIQUE

(30) Priorität: 22.12.1998 DE 19859281
(43) Veröffentlichungstag der Anmeldung: 27.12.2000
(73) Patentinhaber: ROBERT BOSCH GMBH, 70442 Stuttgart (DE)
(72) Erfinder: BRACHERT, Jost, D-71254 Ditzingen (DE); HOLL, Eberhard, D-71665 Vaihingen (DE)
(86) Internationale Anmeldenummer: PCT/DE1999/004069
(87) Internationale Veröffentlichungsnummer: WO 2000/037294

(56) Entgegenhaltungen:
- EP-A- 0 933 274
- DE-A- 4 107 978
- DE-A1- 19 920 448

## Beschreibung

Die vorliegende Erfindung betrifft ein Verfahren zur Kompensation der Temperaturabhängigkeit eines Spulenwiderstandes einer Ventilspule eines Hydroaggregats nach dem Oberbegriff des Patentanspruches 1, ein Verfahren nach dem Oberbegriff des Patentanspruches 5 sowie eine Vorrichtung zur Regelung des Drucks in einer Radbremse nach dem Oberbegriff des Patentanspruches 7.

Unter Fahrdynamikregelungssystemen werden insbesondere Antiblockier- und/oder Antriebsschlupfregelungssysteme (ABS- und/oder ASR-Systeme) verstanden. Mit solchen Regelungssystemen wird die Längsdynamik des Fahrzeugs beeinflußt. Ferner umfaßt dieser Begriff auch Regelungssysteme für Kraftfahrzeuge, mit denen die Querdynamik des Fahrzeuges beeinflußt wird. Beispielsweise handelt es sich um Regelungssysteme zur Regelung einer die Gierrate des Fahrzeuges beschreibenden Größe (FDR/ESP-System). Durch solch ein System wird u.a. das Lenkverhalten von Kraftfahrzeugen (unter Berücksichtigung beispielsweise der Gierrate, des Lenkwinkels, des Schwimmwinkels usw.) beeinflußt.

Aus der Veröffentlichung "Antiblockiersystem und Antriebsschlupfregelung der 5. Generation" von Wolf-Dieter Jonner, Wolfgang Maisch, Robert Mergenthaler und Alfred Sigl in ATZ Automobiltechnische Zeitschrift 95, 1993, Heft 11 ist eine Bremsanlage bekannt, welche Mittel zur Durchführung einer Antiblockier- und einer Antriebsschlupfregelung umfaßt. Die hydraulischen Ventile und die zum Druckaufbau und -abbau verwendeten Pumpenelemente sind dabei in einem sogenannten Hydroaggregat zusammengefaßt. Insbesondere bei der Antriebsschlupfregelung ist es wünschenswert, die Temperatur der Bremsanlage (des Hydroaggregats und damit der Hydraulik), insbesondere die Temperatur der Spulen der jeweiligen Magnetventile zu kennen. Maßnahmen zur Berücksichtigung der Temperatur der Bremsanlage sind bei der bekannten Bremsanlage nicht beschrieben.

Hydroaggregate, die in vorstehend aufgeführten Fahrdynamikregelungssystemen (ABS, ASR, ESP, FDR) eingesetzt werden, sehen Ventile vor, welche linear bzw. proportional betrieben werden können. Dabei hängt der linear einstellbare Druckabfall über dem Ventil entsprechend einer charakteristischen Funktion vom Ventilstrom ab. Der Widerstand der Ventilspule ist jedoch stark abhängig von der Spulentemperatur. Somit sind auch der Ventilstrom und der Druckabfall bei Einstellung einer bestimmten Ventilspannung stark temperaturabhängig. Zur Vermeidung hierdurch auftretender Ungenauigkeiten bei der Fahrdynamikregelung ist es bekannt, die Temperaturen an den jeweiligen Spulen zu messen und bei der Ansteuerung der Spulen auf der Grundlage der gemessenen Temperaturen einen entsprechenden Korrekturfaktor zu berücksichtigen. Die Durchführung von Temperaturmessungen an sämtlichen Ventilspulen erweist sich jedoch als sehr aufwendig.

Insbesondere ist es zum Erhalt zuverlässiger Meßergebnisse notwendig, beispielsweise Ventile mit stromgeregelten Ventilendstufen zu verwenden. Derartige Ventilendstufen bzw. die hiermit ausgerüsteten Ventile sind jedoch verhältnismäßig teuer.

Korrekturverfahren zur Kompensation von Temperatureinflüssen sind zum Beispiel für Magnetventile zur Steuerung einer Kraftstoffzumessung einer Brennkraftmaschine bekannt. So ist in der DE 196 06 965 A1 ein Verfahren zur Steuerung der Kraftstoffzumessung in einer Brennkraftmaschine bekannt, bei dem die Ansteuerdauer des Magnetventils in Abhängigkeit von der Temperatur des Magnetventils korrigierbar ist.

Aufgabe der Erfindung ist daher, eine in einfacher Weise durchzuführende und preiswerte Temperaturerfassung für Magnetventile eines Hydroaggregats zur Verfügung zu stellen.

Diese Aufgabe wird gelöst durch Verfahren mit den Merkmalen der Patentansprüche 1 bzw. 5 sowie durch eine Vorrichtung mit den Merkmalen des Patentanspruchs 7.

Gemäß dem Verfahren nach Patentanspruch 1 wird ausgehend von einer Größe eines ersten Magnetventils eine Temperaturkompensation für ein zweites Ventil durchgeführt. Es muß nicht mehr an jedem einzelnen Magnetventil eine aufwendige Temperaturerfassung durchgeführt werden. Ausschließlich das Magnetventil, an welchem eine Temperaturbestimmung durchgeführt wird, muß mit relativ aufwendigen Mitteln zur Temperaturerfassung ausgebildet sein. Die übrigen Magnetventile können weniger aufwendig und daher preiswerter ausgebildet sein.

Gemäß dem Verfahren nach Anspruch 5 erfolgt zur Berücksichtigung bzw. Eliminierung von Temperatureinflüssen bei der Ansteuerung eines zweiten Magnetventils, welches in einem in einer Fahrzeugbremsanlage enthaltenen Hydroaggregat angeordnet ist, eine Bestimmung wenigstens einer ersten Größe, die das Betriebsverhalten eines ersten Magnetventils beschreibt, eine Bestimmung einer Temperaturgröße, die die Temperatur des zweiten Ventils beschreibt, in Abhängigkeit von der wenigstens einen ersten Größe und eine Berücksichtigung der Temperaturgröße bei der Ansteuerung des zweiten Ventils. Zweckmäßigerweise wird hierbei als erste Größe die Spulenspannung und/oder der Spulenstrom und/oder der Widerstand der Spule und/oder die Temperatur der Spule des ersten Magnetventils verwendet.

Gemäß diesem Verfahren zur Berücksichtigung bzw. Eliminierung von Temperatureinflüssen muß also die Temperatur der Spule des ersten Magnetventils nicht explizit bestimmt werden, wenn in Abhängigkeit beispielsweise von der Spulenspannung, des Spulenstroms oder des Spulenwiderstands eine die Temperatur des zweiten Ventils beschreibende Größe ermittelbar ist.

Vorteilhafte Ausgestaltungen der erfindungsgemäßen Verfahren bzw. der erfindungsgemäßen Vorrichtung sind Gegenstand der Unteransprüche.

Zweckmäßigerweise wird die Ermittlung der Temperatur der Spule des ersten Magnetventils durch Messung einer Spulenspannung und eines Spulenstromes durchgeführt, wobei aus dieser Messung ein temperaturabhängiger Widerstand der Spule berechnet bzw. ermittelt wird. Aus einem derartigen Ventilspulenwiderstand kann in einfacher Weise beispielsweise mit Hilfe der bekannten Temperaturabhängigkeit von Kupferdraht, welcher typischerweise als Spulenmaterial verwendet wird, die Spulentemperatur gewonnen werden.

Gemäß einer besonders bevorzugten Ausführungsform des erfindungsgemäßen Verfahrens zur Temperaturabhängigkeitskompensation wird der Spulenstrom des ersten Magnetventils mittels einer stromgeregelten Ventilendstufe geregelt. Mit einer derartigen stromgeregelten Ventilendstufe ist der Spulenstrom in sehr genauer Weise einstellbar, so daß auch eine an der Spule anliegende Spannung sehr genau bestimmt werden kann. Mit Hilfe der Stromregelung wird an diesem ersten Ventil schon eine Temperaturkompensation durchgeführt. Dies führt insgesamt zu sehr genauen Widerstands- bzw. Temperaturmeßwerten. Als besonders vorteilhaft erweist sich, daß erfindungsgemäß nur das erste Magnetventil mit einer derartigen stromgeregelten Ventilendstufe ausgebildet sein muß. Die übrigen Magnetventile (insbesondere das zweite Magnetventil), an denen die Temperatur nicht direkt gemessen wird, können mit preiswerteren, beispielsweise schaltenden Ventilendstufen ausgerüstet sein.

Zweckmäßigerweise wird die gemessene Spulenspannung am Magnetventil auf einer Rückmeldeleitung des Magnetventils zu dem elektronischen Steuergerät, vorzugsweise mittels einer Pulsweitenmodulation, übertragen.

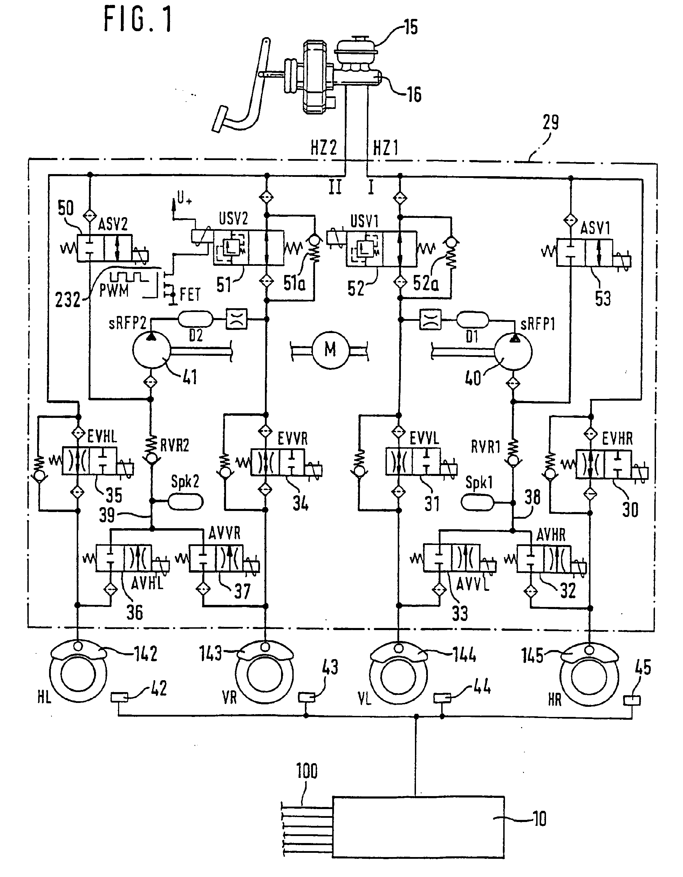

Eine bevorzugte Ausführungsform der erfindungsgemäßen Vorrichtung, bei welchem die erfindungsgemäßen Verfahren durchführbar sind, wird nun unter Bezug auf die beigefügte Zeichnung im einzelnen beschrieben. Es sei angemerkt, daß Vorrichtung und Verfahren gemäß vorliegender Erfindung sowohl bei hydraulischen als auch elektrohydraulischen Bremsanlagen einsetzbar sind. In der Zeichnung zeigt
- Figur 1: einen hydraulischen Schaltplan einer ein Hydroaggregat aufweisenden Fahrzeugbremsanlage.

Die in Figur 1 dargestellte Fahrzeugbremsanlage ist mit einem insgesamt mit 29 bezeichneten Hydroaggregat ausgebildet. Das dargestellte Hydroaggregat dient lediglich zur anschaulichen Darstellung der vorliegenden Erfindung, welche auch bei anders ausgestalteten Hydroaggregaten verwendbar ist.

In der Figur 1 ist eine hydraulische Bremsanlage mit einer Diagonalaufteilung zweier Bremskreise zu sehen, dabei ist mit dem Bezugszeichen 29 in gestrichelter Umrahmung ein Hydroaggregat bezeichnet. Die Bremsanlage hat einen pedalbetätigbaren, zweikreisigen Hauptbremsyzlinder 16 mit einem Druckmittel-Vorratsbehälter 15. Ein erster Bremskreis I ist mit den Radbremsen HR und VL des rechten hinteren und des linken vorderen Rades und ein zweiter Bremskreis II ist mit den Radbremsen HL und VR des linken hinteren und des rechten vorderen Rades verbunden. Der Bremsdruck kann über die nicht angesteuerten Einlaßventile EVHL, EVVR, EVVL und EVHR 35, 34, 31 und 30 den Radbremsen zugeleitet werden. Durch eine Ansteuerung der Einlaßventile EVHL, EVVR, EVVL und EVHR 35, 34, 31 und 30 werden diese geschlossen, womit ein weiterer Druckanstieg in den Radbremsen verhindert werden kann. Eine Druckminderung geschieht durch Ansteuerung der Auslaßventile AVHL, AVVR, AVVL und AVHR 36, 37, 33 und 32 über die Rückleitungen 38 und 39 mittels der Rückförderpumpen sRFP1 und sRFP2 40 und 41. Die Rückförderpumpen werden durch den Elektromotor M angetrieben. Es soll darauf hingewiesen werden, daß die Rückförderpumpen sRFP1 und sRFP2 40 und 41 in bekannter Weise (siehe z.B. Figuren 4 und 5 der DE-OS 43 37 133 und Figur 2 der EP 0 538 600 B1) selbstsaugend ausgelegt sind. Dies bedeutet, daß diese Rückförderpumpen auch ohne Vordruck Bremsflüssigkeit fördern können. Für jede Rückförderpumpe sRFP1 und sRFP2 40 und 41 ist sowohl ein Ansaugventil ASV1 und ASV2 53 und 50 als auch ein Rückschlagventil RVR1 und RVR2 vorgesehen. Durch eine Ansteuerung der Umschaltventile USV1 und USV2 52 und 51 kann eine Trennung von dem Vordruckkreis erreicht werden. Darüber hinaus sind die Speicherkammern Spk1 und Spk2 und die Dämpferkammern D1 und D2 vorgesehen.

Die für die Ansteuerung erforderlichen Verbindungen zwischen dem Steuergerät 10 und den einzelnen Ventilen bzw. Pumpen sind der Übersichtlichkeit halber nicht eingezeichnet. Die Signale, die dem Steuergerät 10 zugeführt werden bzw. von diesen abgegeben werden, sind mit 100 dargestellt.

Soweit es das bisher beschriebene Hydroaggregat 29 betrifft, handelt es sich um eine vorbekannte Ausgestaltung. Im normalen Betrieb des Bremssystems werden die Magnetventile zur Vermeidung eines Blockierens der Fahrzeugräder, zur Regelung des Antriebsschlupfes der angetriebenen Räder bzw. zur Regelung der Fahrdynamik in bekannter Weise von einem Steuergerät aus angesteuert.

An dieser Stelle sei bemerkt, daß die Verwendung einer Bremsanlage mit Diagonalaufteilung keine einschränkende Wirkung haben soll.

Das elektronische Steuergerät 10 erhält Signale von Raddrehsensoren 42, 43, 44, 45 und steuert den Pumpenmotor M, die Einlaßventile 30, 31, 34, 35, die Auslaßventile 32, 33, 36, 37, die Ansaugventile 50, 53 und die Umschaltventile 51, 52 an.

Herkömmliches Bremsen erfolgt wie üblich durch Betätigung des Hauptbremszylinders 16, der durch die in ihrer Grundstellung offenen Einlaßventile 30, 31, 34, 35 mit den (schematisch dargestellten) Radbremszylindern 142, 143, 144, 145 kommuniziert.

Zur Blockierschutzregelung wird, wenn an einem der Fahrzeugräder Blockiergefahr auftritt, der Pumpenmotor M eingeschaltet und damit die entsprechende Rückförderpumpe 40, 41 in Gang gesetzt. Neigt beispielsweise das Vorderrad VL zum Blockieren wird das diesem zugeordnete Einlaßventil 31 kurzzeitig mindestens einmal geschlossen und damit der weitere Druckaufbau gestoppt. Durch Öffnen des Auslaßventils 33 wird mit der Rückförderpumpe 40, an die der Radbremszylinder 144 des Vorderrades VL angeschlossen ist, Bremsflüssigkeit aus dem Radbremszylinder 144 herausfördert, wodurch der Bremsflüssigkeitsdruck in dem Radbremszylinder 144 absinkt und die Bremskraft am Vorderrad VL verringert wird. Die herausgeförderte Bremsflüssigkeit wird durch das offene Umschaltventil 52 dem Hauptbremszylinder 16 zugeführt. Wird das Einlaßventil 31 des zum Blockieren neigenden Fahrzeugrades VL wieder geöffnet und das Auslaßventil 33 geschlossen, erhöht sich der Bremsflüssigkeitsdruck in dessen Radbremszylinder 144 wieder.

Die dargestellten Umschaltventile 51, 52 sind linear betreibbare Magnetventile, bei denen der linear einstellbare Druckabfall nach einer bestimmten Funktion von dem vorliegenden Ventilstrom abhängt. Die zu diesem Zwecke vorgesehene Ventilendstufe ist weiter unten dargestellt. Der Widerstand der Ventilspule des Umschaltventils 51, 52 ist jedoch stark abhängig von der Temperatur. Damit ist auch der Ventilstrom und der Druckabfall an dem Umschaltventil 51, 52 bei Einstellung einer bestimmten Ventilspannung stark temperaturabhängig. Dem Umschaltventil 51, 52 parallel geschaltet ist jeweils ein Rückschlagventil 51a, 52a.

Bei ABS/ASR bzw. ESP/FDR mit kontinuierlicher Regelung (CPC: Continuous Pressure Control) wird der Radbremsdruck im Rad mit dem jeweils höheren Bremsdruck in dem Bremskreis durch den kontinuierlich regelbaren Druckabfall am Umschaltventil 51, 52 eingestellt. Die Ansaugventile (ASV) 50, 53 bzw., sofern vorhanden, Hochdruckabschaltventile (HSV) sind hierbei während der ganzen Dauer der Regelung geöffnet. Ferner ist das Einlaßventil des Rades mit dem höheren Radbremsdruck in dem Bremskreis immer offen, das Auslaßventil immer geschlossen. Der Radbremsdruck in dem Rad mit dem niedrigeren Radbremsdruck des Bremskreises wird mit dem durch den linear eingestellten Druckabfall über dem Einlaßventil dieses Rades eingestellt, d.h. dieser Raddruck ist gleich der Differenz des Druckabfalls über dem Umschaltventil 51, 52 und der Druckdifferenz über diesem Einlaßventil.

Zur kontinuierlichen Regelung weisen die Umschaltventile 51, 52 jeweils eine stromgeregelte Ventilendstufe 232 auf. Aus Gründen der Übersichtlichkeit ist diese Ventilendstufe nur für das Umschaltventil 51 in der Figur 1 dargestellt. Hierbei steuert ein pulsweitenmoduliertes Signal (PWM-Signal) einen an einer Batteriespannung U₊ anliegenden Feldeffekttransistor. Die Regelung des PWM-Signals zur Einstellung eines konstanten Ventilstromes ist nicht im einzelnen dargestellt. Wenn bei einer derartigen stromgeregelten Ventilendstufe 232 die tatsächlich von der Endstufe eingestellte Ventilspannung im Steuergerät 10 erfaßt werden kann, kann dort aus dem Ventilstrom und der Ventilspannung unter Anwendung des Ohm'schen Gesetzes der Ventilspulenwiderstand des Umschaltventils 51 bzw. 52 berechnet werden. Alternativ dazu kann, wenn anstelle der Ventilspannung in dem Steuergerät 10 nur das Pulsweitenverhältnis der tatsächlichen Ventilansteuerung erfaßt werden kann, die für die Bestimmung des Ventilwiderstands notwendige Ventilspannung aus einer (zu messenden) Versorgungsspannung und dem Pulsweitenverhältnis der Ventilansteuerung berechnet werden.

Insgesamt ist der Ventilspulenwiderstand bei stromgeregelten Ventilendstufen in sehr genauer Weise meßbar, so daß mit Hilfe der bekannten Temperaturabhängigkeit des Spulenmaterials, beispielsweise Kupferdraht, in sehr genauer Weise die Spulentemperatur gewonnen werden kann.

Da also insgesamt der durch die Spule des Umschaltventils 51, 52 fließende Strom, die an der Spule anliegende Spannung und damit auch die Leistung zu jeder Zeit zusammen mit der Spulentemperatur bekannt sind, kann über ein Temperaturmodell der Ventilspule auf die Temperatur des Hydroaggregats 29 geschlossen werden. Ein Temperaturmodell der Ventilspule berücksichtigt beispielsweise die Wärmekapazität sowie die Wärmeab- und Zuleitung der Ventilspule (inverses Temperaturmodell).

Bei bekannter Temperatur des Hydroaggregats 29 können über entsprechende Temperaturmodelle der jeweiligen weiteren Ventile, beispielsweise der Einlaßventile 30, 31, 34, 35 bzw. der Auslaßventile oder ASVs, die Temperaturen der Ventilspulen dieser weiteren Ventile ermittelt werden. Auch diese Temperaturmodelle berücksichtigen vorteilhafterweise die Wärmekapazität sowie die Wärmeableitung und Zuleitung der jeweiligen Ventilspule bzw. des jeweiligen Ventils. Es ist auch möglich, hierbei die Wärmekapazität, die Wärmeableitung und -zuleitung des Hydroaggregats zu berücksichtigen.

Bei so ermittelter Spulentemperatur beispielsweise der Einlaßventile 30, 31, 34, 35 kann in dem elektronischen Steuergerät 10 eine Kompensation der Temperaturabhängigkeit des Spulenwiderstandes vorgenommen werden. Eine Stromregelung an den Einlaßventilen bzw. eine stromgeregelte Endstufe für die Einlaßventile 30, 31, 34, 35 ist daher nicht notwendig. Die Einlaßventile 30, 31, 34, 35 sowie die Auslaßventile bzw. ASVs können daher mit preiswerteren (schaltenden) Ventilendstufen ausgestattet werden.

Zweckmäßigerweise erfolgt die dargestellte Temperaturbestimmung der Spulen der Umschaltventile 51, 52, sowie die Berechnung der Temperatur des Hydroaggregats sowie der Spulen der weiteren Ventile in dem elektronischen Steuergerät 10. Hierbei liegt der Stromwert, auf den das Umschaltventil 51, 52 aktuell geregelt ist, im Steuergerät 10 vor. Die an der Ventilspule des Umschaltventils 51, 52 anlegende Ventilspannung wird ebenfalls in das Steuergerät 10 übertragen, vorzugsweise auf einer vorhandenen Rückmeldeleitung des Umschaltventils. Diese Übertragung kann z.B. über eine Pulsweitenmodulation erfolgen. Zweckmäßigerweise erhält das zu übertragende Ventilspannungssignal die gleiche Pulsweitenmodulation, mit der das Umschaltventil 51, 52 angesteuert wird. Die Berechnung der Temperatur des Hydroaggregates 29 kann dann, wie beschrieben, in dem Steuergerät 10 durchgeführt werden.

Unter Berücksichtigung der Wärmekapazität und der aktuellen Wärmeableitung bzw. -zuleitung der Einlaßventile 30, 31, 34, 35 erfolgt die Berechnung der Temperatur der Spulen dieser Ventile ebenfalls in dem elektronischen Steuergerät. Auf der Grundlage der ermittelten Temperatur der Einlaßventile 30, 31, 34, 35 ist das elektronische Steuergerät 10 in der Lage, bei der Ansteuerung der Einlaßventile 30, 31, 34, 35 die Temperaturabhängigkeit der Spulenwiderstände der Einlaßventile 30, 31, 34, 35 zu kompensieren.

Es sei angemerkt, daß zur Ermittlung der Spulentemperatur des Umschaltventils 51, 52 dieses angesteuert werden muß. Dies kann sowohl während einer ABS-/ASR- bzw. FDR/ESP-Regelung, als auch ohne Aktivierung der Rückförderpumpe, also ohne Druck in dem Hydroaggregat erfolgen.

Die Kenntnis der Hydroaggregatstemperatur verbessert ferner die ASR-Regelung bei extremen Temperaturen durch die Möglichkeit einer Korrektur verschiedener Temperaturabhängigkeiten des Raddrucks (z.B. in der Ventilendstufe oder durch Viskosität der Bremsflüssigkeit).

An dieser Stelle sei folgendes erwähnt: Ein Hydroaggregat weist für gewöhnlich mehrere gleiche Ventile, die die gleiche Funktion bzw. eine entsprechende Anordnung im Hydroaggregat haben, auf (beispielsweise Einlaßventile bzw. Auslaßventile, die jeweils den Radbremszylindern zugeordnet sind oder Umschaltventile bzw. Ansaugventile, die jeweils einem Bremskreis zugeordnet sind). Bei dem vorliegenden erfindungsgemäßen Gegenstand wurde die Festlegung bezüglich erstem und zweitem Ventil, wie sie beispielsweise den Ansprüchen zu entnehmen ist, anhand der Funktion bzw. der Anordnung vorgenommen. Im konkreten Fall handelt es sich bei dem ersten Ventil um ein bzw. beide Umschaltventile und bei dem zweiten Ventil um ein bzw. um mehrere bzw. sämtliche Einlaßventile. In entsprechender Weise wäre denkbar, als erstes Ventil beispielsweise das Einlaßventil des linken Vorderrades und als zweites Ventil das Einlaßventil des rechten Hinterrades zu verwenden, d.h. ein erstes und ein zweites Ventil der gleichen Funktion bzw. Anordnung zu verwenden.

## Patentansprüche

1. Verfahren zur Kompensation einer Temperaturabhängigkeit eines Spulenwiderstandes wenigstens eines zweiten Magnetventils (30, 31, 34, 35), welches in einem in einer Fahrzeugbremsanlage enthaltenen Hydroaggregat (29), insbesondere einem Fahrdynamikregelungssystem-Hydroaggregat, mit wenigstens einem ersten Magnetventil und wenigstens einem zweiten Magnetventil angeordnet ist, **gekennzeichnet durch** folgende Schritte:
- Bestimmung einer Temperatur T₁ einer Spule wenigstens des ersten Magnetventils des Hydroaggregats, insbesondere eines Umschaltventils (51, 52),
- Bestimmung einer Temperatur T₂ des Hydroaggregats (29) auf der Grundlage der bestimmten Temperatur T₁ unter Berücksichtigung eines Temperaturmodells der Spule des ersten Magnetventils (51,52), insbesondere auf Grundlage der Wärmekapazität, der Wärmezuleitung und der Wärmeableitung der Spule des ersten Magnetventils (51, 52) und/oder des Hydroaggregats (29),
- Bestimmung einer Temperatur T₃ der Spule des zweiten Magnetventils (30, 31, 34, 35) auf der Grundlage der Temperatur T₂ des Hydroaggregats (29) unter Berücksichtigung eines Temperaturmodells der Spule des zweiten Magnetventils (30, 31, 34, 35), insbesondere auf der Grundlage der Wärmekapazität, der Wärmezuleitung und der Wärmeableitung der Spule des zweiten Magnetventils (30, 31, 34, 35) und/oder des Hydroaggregats (29), und
- Kompensation der Temperaturabhängigkeit des Spulenwiderstandes der Spule des wenigstens einen zweiten Magnetventils (30, 31, 34, 35) auf der Grundlage der bestimmten Temperatur T₃.

2. Verfahren nach Anspruch 1, **dadurch gekennzeichnet, daß** die Temperatur T₁ der Spule des ersten Magnetventils (51, 52) durch Messung einer Spulenspannung und eines Spulenstromes erfolgt, wobei aus den so erhaltenen Meßwerten ein temperaturabhängiger Widerstand der Spule berechnet wird.

3. Verfahren nach Anspruch 2, **dadurch gekennzeichnet, daß** der Spulenstrom mittels einer stromgeregelten Ventilendstufe (232) des ersten Magnetventils (51, 52) geregelt wird.

4. Verfahren nach einem der vorstehenden Ansprüche, **dadurch gekennzeichnet, daß** die gemessene Spulenspannung am ersten Magnetventil (51, 52) auf einer Rückmeldeleitung des Magnetventils (51, 52) zu dem elektronischen Steuergerät (10), vorzugsweise mittels einer Pulsweitenmodulation, übertragen wird.

5. Verfahren zur Berücksichtigung bzw. Eliminierung von Temperatureinflüssen bei der Ansteuerung eines zweiten Magnetventils (30, 31, 34, 35), welches in einem in einer Fahrzeugbremsanlage enthaltenen Hydroaggregat (29) mit wenigstens einem ersten Magnetventil und wenigstens einem zweiten Magnetventil angeordnet ist, **gekennzeichnet durch** folgende Schritte:
- Bestimmung wenigstens einer ersten Größe, die das Betriebsverhalten des ersten Magnetventils (51, 52) beschreibt,
- Bestimmung einer Temperaturgröße T₃, die die Temperatur des zweiten Magnetventils beschreibt, in Abhängigkeit von der wenigstens einen ersten Größe, und
- Berücksichtigung der Temperaturgröße bei der Ansteuerung des zweiten Magnetventils.

6. Verfahren nach Anspruch 5, **dadurch gekennzeichnet, daß** als erste Größe die Spulenspannung und/oder der Spulenstrom und/oder der Widerstand der Spule und/oder die Temperatur der Spule des ersten Magnetventils verwendet wird.

7. Vorrichtung zur Regelung des Drucks in wenigstens einer Radbremse, mit wenigstens einem ersten Magnetventil (51, 52) und wenigstens einem zweiten Magnetventil (30, 31, 34, 35), wobei die Magnetventile in einem Hydroaggregat (29) angeordnet sind und durch eine elektronische Steuereinheit (10) zum Druckaufbau und zum Druckabbau in der Radbremse ansteuerbar sind, **gekennzeichnet durch** Mittel (10) zur Bestimmung einer Temperatur T₁ einer Spule des wenigstens einen ersten Magnetventils (51, 52), Mittel (10) zur Bestimmung einer Temperatur T₂ des Hydroaggregats (29) auf der Grundlage der bestimmten Temperatur T₁, Mittel (10) zur Bestimmung einer Temperatur T₃ einer Spule des wenigstens einen zweiten Magnetventils (30, 31, 34, 35) auf der Grundlage der ermittelten Temperatur T₂ des Hydroaggregats (29), und Mittel (10) zur Kompensation der Temperaturabhängigkeit der Spule des wenigstens einen zweiten Magnetventils (30, 31, 34, 35) auf der Grundlage der bestimmten Temperatur T₃.

8. Vorrichtung nach Anspruch 7, **dadurch gekennzeichnet, daß** das erste Magnetventil (51, 52) eine stromgeregelte Ventilendstufe (232) aufweist, wobei über die Mittel (10) zur Bestimmung der Temperatur T₁ durch Erfassung eines durch die stromgeregelte Ventilendstufe (232) geregelten Spulenstromes und einer an der Spule anliegenden Spulenspannung ein temperaturabhängiger Widerstand der Spule ermittelbar ist.

9. Vorrichtung nach einem der Ansprüche 7 oder 8, **dadurch gekennzeichnet, daß** das wenigstens eine erste Magnetventil ein Umschaltventil (51, 52), und das wenigstens eine zweite Magnetventil ein Einlaßventil (30, 31, 34, 35) eines Radbremszylinders (142, 143, 144, 145) ist.

## Claims

1. Method for compensating for the temperature dependence of a coil resistance at least of a second solenoid valve (30, 31, 34, 35) which is arranged in a hydraulic unit (29) which is part of a vehicle braking system, in particular in a hydraulic unit of a vehicle dynamics control system, and has at least one first solenoid valve and at least one second solenoid valve, **characterized by** the following steps:
- determination of a temperature T₁ of a coil at least of the first solenoid valve of the hydraulic unit, in particular of a changeover valve (51, 52),
- determination of a temperature T₂ of the hydraulic unit (29) on the basis of the determined temperature T₁ taking into account a temperature model of the coil of the first solenoid valve (51, 52), in particular on the basis of the thermal capacity of, of the supply of heat to and of the dissipation of heat from the coil of the first solenoid valve (51, 52) and/or of the hydraulic unit (29),
- determination of a temperature T₃ of the coil of the second solenoid valve (30, 31, 34, 35) on the basis of the temperature T₂ of the hydraulic unit (29) taking into account a temperature model of the coil of the second solenoid valve (30, 31, 34, 35), in particular on the basis of the thermal capacity of, of the supply of heat to and of the dissipation of heat from the coil of the second solenoid valve (30, 31, 34, 35) and/or of the hydraulic unit (29), and
- compensation for the temperature dependence of the resistance of the coil of the at least one second solenoid valve (30, 31, 34, 35) on the basis of the determined temperature T₃.

2. Method according to Claim 1, **characterized in that** the temperature T₁ of the coil of the first solenoid valve (51, 52) is determined by measuring a coil voltage and a coil current, with the temperature-dependent resistance of the coil being calculated from the measured values obtained in this way.

3. Method according to Claim 2, **characterized in that** the coil current is controlled by means of a current-controlled output stage (232) of the first solenoid valve (51, 52).

4. Method according to one of the preceding claims, **characterized in that** the coil voltage measured across the first solenoid valve (51, 52) is transmitted on a feedback line of the solenoid valve (51, 52) to the electronic controller (10), preferably by means of pulse-width modulation.

5. Method for taking into account or eliminating temperature influences when actuating a second solenoid valve (30, 31, 34, 35) which is arranged in a hydraulic unit (29) which is part of a vehicle braking system and has at least one first solenoid valve and at least one second solenoid valve, **characterized by** the following steps:
- determination at least of one first variable which describes the operating behaviour of the first solenoid valve (51, 52),
- determination of a temperature variable T₃, which describes the temperature of the second solenoid valve, as a function of the at least one first variable, and
- taking into account the temperature variable when actuating the second solenoid valve.

6. Method according to Claim 5, **characterized in that** the coil voltage and/or the coil current and/or the resistance of the coil and/or the temperature of the coil of the first solenoid valve is/are used as the first variable.

7. Apparatus for controlling the pressure in at least one wheel brake and having at least one first solenoid valve (51, 52) and at least one second solenoid valve (30, 31, 34, 35), with the solenoid valves being arranged in a hydraulic unit (29) and it being possible for an electronic control unit (10) to actuate the said solenoid valves to increase and decrease the pressure in the wheel brake, **characterized by** means (10) for determining a temperature T₁ of a coil of the at least one first solenoid valve (51, 52), means (10) for determining a temperature T₂ of the hydraulic unit (29) on the basis of the determined temperature T₁, means (10) for determining a temperature T₃ of a coil of the at least one second solenoid valve (30, 31, 34, 35) on the basis of the acquired temperature T₂ of the hydraulic unit (29), and means (10) for compensating for the temperature dependence of the coil of the at least one second solenoid valve (30, 31, 34, 35) on the basis of the determined temperature T₃.

8. Apparatus according to Claim 7, **characterized in that** the first solenoid valve (51, 52) has a current-controlled valve output stage (232), it being possible to use the means (10) for determining the temperature T₁ to determine a temperature-dependent resistance of the coil by detecting the coil current, which is controlled by the current-controlled valve output stage (232), and a coil voltage which is applied to the coil.

9. Apparatus according to either of Claims 7 and 8, **characterized in that** the at least one first solenoid valve is a changeover valve (51, 52), and the at least one second solenoid valve is an inlet valve (30, 31, 34, 35) of a wheel brake cylinder (142, 143, 144, 145).

## Revendications

1. Procédé de compensation d'une dépendance de la température d'une résistance de la bobine d'au moins une deuxième électrovanne (30, 31, 34, 35) qui est disposée dans un groupe hydraulique (29) contenu dans un système de freinage d'un véhicule, en particulier dans un groupe hydraulique d'un système de régulation de la dynamique de conduite, comprenant au moins une première électrovanne et au moins une deuxième électrovanne,
**caractérisé par** les étapes suivantes :
- détermination d'une température T₁ d'une bobine au moins de la première électrovanne du groupe hydraulique, en particulier d'une vanne d'inversion (51, 52),
- détermination d'une température T₂ du groupe hydraulique (29) sur la base de la température T₁ déterminée en tenant compte d'un modèle de température de la bobine de la première électrovanne (51, 52), en particulier sur la base de la capacité thermique, de l'apport de chaleur et de la dissipation de chaleur de la bobine de la première électrovanne (51, 52) et/ou du groupe hydraulique (29),
- détermination d'une température T₃ de la bobine de la deuxième électrovanne (30, 31, 34, 35) sur la base de la température T₂ du groupe hydraulique (29) en tenant compte d'un modèle de température de la bobine de la deuxième électrovanne (30, 31, 34, 35), en particulier sur la base de la capacité thermique, de l'apport de chaleur et de la dissipation de chaleur de la bobine de la deuxième électrovanne (30, 31, 34, 35) et/ou du groupe hydraulique (29), et
- compensation de la dépendance de température de la résistance de la bobine de la bobine de l'au moins une électrovanne (30, 31, 34, 35) sur la base de la température T₃ déterminée.

2. Procédé selon la revendication 1,
**caractérisé en ce que**
la détermination de la température T₁ de la bobine de la première électrovanne (51, 52) s'effectue par la mesure d'une tension de la bobine et d'un courant de la bobine, et une résistance de la bobine dépendante de la température est calculée à partir des valeurs de mesure ainsi obtenues.

3. Procédé selon la revendication 2,
**caractérisé en ce que**
le courant de la bobine est régulé au moyen d'un étage terminal de vanne (232) régulé par courant de la première électrovanne (51, 52).

4. Procédé selon l'une quelconque des revendications précédentes,
**caractérisé en ce que**
la tension de la bobine mesurée sur la première électrovanne (51, 52) est transmise sur une ligne d'information en retour de l'électrovanne (51, 52) vers l'appareil de commande électronique (10), de préférence au moyen d'une modulation d'impulsions en largeur.

5. Procédé pour tenir compte ou éliminer des influences de température lors de la commande d'une deuxième électrovanne (30, 31, 34, 35) disposée dans un groupe hydraulique (29) contenu dans un système de freinage d'un véhicule, en particulier dans un groupe hydraulique d'un système de régulation de la dynamique de conduite comprenant au moins une première électrovanne et au moins une deuxième électrovanne,
**caractérisé par**
les étapes suivantes :
- détermination d'au moins une première grandeur qui décrit la caractéristique de fonctionnement de la première électrovanne (51, 52),
- détermination d'une grandeur de température T₃, qui décrit la température de la deuxième électrovanne, en fonction de l'au moins une première grandeur, et
- prise en compte de la grandeur de température pour la commande de la deuxième électrovanne.

6. Procédé selon la revendication 5,
**caractérisé en ce que**
comme première grandeur, on utilise la tension de la bobine et/ou le courant de la bobine et/ou la résistance de la bobine et/ou la température de la bobine de la première électrovanne.

7. Dispositif de régulation de la pression dans au moins un frein de roue, comprenant au moins une première électrovanne (51, 52) et au moins une deuxième électrovanne (30, 31, 34, 35) disposées dans un groupe hydraulique (29) et commandées par une unité de commande électronique (10) pour faire monter ou baisser la pression dans le frein de roue,
**caractérisé par**
des moyens (10) pour déterminer une température T₁ d'une bobine de l'au moins une première électrovanne (51, 52), des moyens (10) pour déterminer une température T₂ du groupe hydraulique (29) sur la base de la température T₁ déterminée, des moyens (10) pour déterminer une température T₃ d'une bobine de l'au moins une deuxième électrovanne (30, 31, 34, 35) sur la base de la température T₂ déterminée du groupe hydraulique (29), et des moyens (10) pour compenser la dépendance de la température de la bobine de l'au moins une deuxième électrovanne (30, 31, 34, 35) sur la base de la température T₃ déterminée.

8. Dispositif selon la revendication 7,
**caractérisé en ce que**
la première électrovanne (51, 52) présente un étage terminal de vanne (232) régulé par courant, et une résistance de la bobine dépendante de la température peut être déterminée par les moyens (10) pour déterminer la température T₃ par mesure d'un courant de la bobine régulé par l'étage terminal de vanne (232) régulé par courant et une tension de la bobine dépendante de la tension présente sur la bobine.

9. Dispositif selon l'une quelconque des revendications 7 ou 8,
**caractérisé en ce que**
l'au moins une première électrovanne est une vanne d'inversion (51, 52) et l'au moins deuxième électrovanne est une vanne d'admission (30, 31, 34, 35) d'un cylindre de frein de roue (142, 143, 144, 145).
